## Europäisches Patentamt
## European Patent Office
## Office européen des brevets

(19)

(11) Veröffentlichungsnummer: **0 074 617**
**B1**

(12) # EUROPÄISCHE PATENTSCHRIFT

(45) Veröffentlichungstag der Patentschrift:
23.01.85

(51) Int. Cl.⁴: **H 04 M 1/66,** H 01 H 9/28

(21) Anmeldenummer: **82108298.9**

(22) Anmeldetag: **09.09.82**

(54) **Vorrichtung zum Sperren wenigstens einer Wähltaste bei Tastentelefonen.**

(30) Priorität: **12.09.81 DE 3136274**

(43) Veröffentlichungstag der Anmeldung:
**23.03.83 Patentblatt 83/12**

(45) Bekanntmachung des Hinweises auf die Patenterteilung:
**23.01.85 Patentblatt 85/4**

(84) Benannte Vertragsstaaten:
**AT CH DE FR GB IT LI**

(56) Entgegenhaltungen:
**DE - A - 2 919 599
DE - A - 3 043 583
NL - A - 7 117 128
US - A - 4 236 395**

(73) Patentinhaber: **Naplerski, Reinhard, Talstrasse 18,
D-6361 Niddatal 1 (DE)**

(72) Erfinder: **Naplerski, Reinhard, Talstrasse 18,
D-6361 Niddatal 1 (DE)**

(74) Vertreter: **Jochem, Bernd, Dipl.-Wirtsch.-Ing. et al,
Patentanwälte Beyer & Jochem Staufenstrasse 36,
D-6000 Frankfurt/Main (DE)**

**Beschreibung**

Die Erfindung betrifft eine Vorrichtung zum Sperren wenigstens einer Wähltaste bei Tastentelefonen, bestehend aus einer die Taste überdeckenden Haube, wenigstens einem mit dieser verbundenen, am Telefon angreifenden Riegel und einem diese Verriegelung sichernden Schloß.

Während sich ein Telefon mit Wählscheibe verhältnismäßig einfach gegen unbefugten Gebrauch sperren läßt, bereitet es größere Schwierigkeiten, ein Tastentelefon zu sperren, weil die Sperrvorrichtung schlecht Halt am Telefon findet. Vorrichtungen, die den Telefonapparat teilweise umgreifen, sind sehr groß und entsprechend teuer, außerdem unhandlich und schlecht zu verstauen (z. B. DE-A-2 919 599). Sperrvorrichtungen, die an den Tasten selbst angeklemmt werden könnten, bräuchten einen aufwendigen Klemmechanismus und sind nicht wirklich zuverlässig, insbesondere, wenn nach einigem Gebrauch die Klemmkraft nachläßt.

Der Erfindung liegt die Aufgabe zugrunde, eine Sperrvorrichtung der eingangs genannten Art zu schaffen, welche nicht nur klein und einfach, sondern auch dauerhaft zuverlässig ist, und diese Aufgabe wird erfindungsgemäß dadurch gelöst, daß der Riegel passend zum Eingriff in eine Ausnehmung in der Seitenfläche einer Wähltaste ausgebildet und angeordnet ist.

Das Einschneiden der Ausnehmungen in den Kunststoff der Wähltasten kann selbstverständlich mit einem geeigneten Schneidwerkzeug geschehen. Daneben besteht aber auch die Möglichkeit, in einer bevorzugten Ausführungsform der Erfindung den Riegel der Sperrvorrichtung mit einer Schneidkante auszubilden, welche derart angeordnet ist, daß bei einer ersten Drehbewegung des Riegels relativ zu einer Wähltaste darin eine Ausnehmung einschneidbar ist. Je nach der Form des Riegels findet dabei die Drehbewegung koaxial zur Mittellängsachse einer Wähltaste statt oder parallel zu dieser. Im erstgenannten Fall kann der Riegel zweckmäßigerweise aus einem oder mehreren Ringsegmenten bestehen, die am inneren Umfang eines drehbaren hohlzylindrischen Tragteils oder Exzenterarms auf einem solchen Radius angebracht sind, daß sie bei Drehung des Tragteils um die Mittellängsachse der Wähltaste nur im Bereich der Ecken in deren Querschnittsprofil eindringen. Im anderen Fall kann der Riegel die Form einer unrunden oder exzentrisch gelagerten Scheibe haben, welche bei aufgesetzter Haube vom Rand des Tastenfeldes aus nur bei bestimmter Drehwinkelstellung an einer Ecke oder einer geraden Seitenfläche einer Wähltaste in deren Querschnittsprofil eingreift.

Die Erfindung gestattet verschiedene Variationen, die sich durch die Zahl der überdeckten und dadurch gesperrten Wähltasten sowie durch die Anordnung und Ausführung der Riegel unterscheiden. Oft genügt es, nur eine einzige Wähltaste, z. B. die für Ferngespräche, zu sperren.

Dann kommt man mit einer sehr kleinen Haube aus, welche nur diese eine Taste zu überdecken braucht. Da ein Schloß zwei relativ zueinander drehbare Teile hat, ein vorzugsweise benutztes Zylinderschloß z. B. den Zylinder und das diesen umgebende Gehäuse, kann eines dieser beiden relativ zueinander drehbaren Teile des Schlosses den in die Ausnehmung der Wähltaste eingreifenden Riegel tragen, während das andere Teil des Schlosses mit einem an derselben Wähltaste oder an anderer Stelle des Tastenfelds zur Anlage kommenden Anschlag verbunden ist. Das Schloß ist so einzustellen, daß sich in seiner geöffneten Stellung die Haube der Sperrvorrichtung über die zu sperrenden Wähltasten setzen läßt und dabei der mit dem einen Schloßteil verbundene Anschlag zur Anlage an einer oder mehreren Tasten kommt, wodurch die Drehung dieses Schloßteils relativ zu den Tasten verhindert wird. Bei der anschließenden Relativdrehung des mit dem Riegel verbundenen Schloßteils aus der Öffnungs- in die Schließstellung kommt der Riegel zum Eingriff in die Ausnehmung wenigstens einer Wähltaste. Wird in dieser Sperrstellung der Schlüssel des Schlosses abgezogen, so sind die beiden Schloßteile gegen Drehung gesperrt, d. h., der Riegel bleibt in Eingriff mit der Ausnehmung in der Wähltaste und die eine oder mehrere Wähltasten überdeckende und dadurch sperrende Haube läßt sich nicht entfernen.

In einer bevorzugten Ausführungsform der Erfindung, die zum Sperren einer einzelnen Wähltaste bestimmt ist, ist ein ringsegmentförmiger Riegel an einer mit dem Gehäuse des Schlosses fest verbundenen, nur die einzelne Taste überdeckenden Haube angebracht. Der Riegel kann einstückig mit der Haube ausgebildet sein, aber auch z. B. aus Metallsegmenten bestehen, die in eine im wesentlichen zylindrische Haube aus Kunststoff fest eingebettet sind. Die mit dem Gehäuse des Schlosses vereinigte Haube umgibt auch den Zylinder und den damit verbundenen Anschlag. Letzterer kann z. B. aus zwei parallelen Backen bestehen, die oberhalb der Ausnehmungen in der Wähltaste an zwei gegenüberliegenden Seitenflächen derselben zur Anlage kommen und dadurch eine Drehung des Zylinders relativ zur Wähltaste verhindern. Es versteht sich, daß auch noch ein zweites Paar Anschlagbacken vorhanden sein kann, welches an den beiden anderen Seitenflächen der Wähltaste zur Anlage kommt. Um die Sperrvorrichtung nach dem losen Aufsetzen auf die Wähltaste in Sperrstellung zu bringen, wird in diesem Fall die mit dem Schloßgehäuse fest verbundene Haube von Hand um etwa 45° gedreht. Dadurch können ein oder mehrere ringsegmentförmige Riegel, die sich beim losen Aufsetzen der Haube auf die Wähltaste zunächst neben deren Seitenflächen befanden, in Ausnehmungen an den Ecken der Wähltaste eintreten. Wenn der oder die Riegel mit Schneidkanten zur Erzeugung der Ausnehmungen an den Ecken der Wähltaste versehen sind, empfiehlt es sich, an der Haube gegenüberliegende parallele Angriffsflächen zum Ansetzen eines Werkzeugs nach Art eines Schraubenschlüssels anzubringen.

In alternativer Ausführung könnte bei der Sperrvorrichtung zum Sperren einer einzelnen Wähltaste der Riegel auch mit dem Zylinder verbunden und der Anschlag an der Haube angebracht sein. Diese Anordnung wird auch dann bevorzugt, wenn mehrere oder alle Tasten eines Tastenfelds überdeckt und dadurch gesperrt werden sollen. In diesem Fall kann die Haube z. B. in Anpassung an die rechteckige Form des Tastenfelds ebenfalls rechteckig gestaltet werden, so daß sie sich und auch das mit ihr verbundene Gehäuse des Schlosses relativ zum Tastenfeld nicht drehen kann. Beim Drehen des Zylinders mit Hilfe des Schlüssels aus der geöffneten in die Sperrstellung des Schlosses wird ein, z. B. wiederum kreissegmentförmiger, Riegel aus einer neutralen Stellung neben der Seitenfläche einer Wähltaste in eine Ausnehmung in die Ecke einer Wähltaste gebracht. Diese Verriegelung an einer einzigen mit Ausnehmungen versehenen Wähltaste genügt, um die Abdeckhaube auf dem gesamten Tastenfeld zu halten.

Die Erfindung wird nachstehend anhand von in der Zeichnung dargestellten Ausführungsbeispielen näher erläutert. Es zeigt

Fig. 1 eine Sperrvorrichtung gemäß der Erfindung für eine einzelne Wähltaste;

Fig. 2 einen Querschnitt durch die Sperrvorrichtung nach Fig. 1;

Fig. 3 eine Sperrvorrichtung gemäß der Erfindung für ein Tastenfeld.

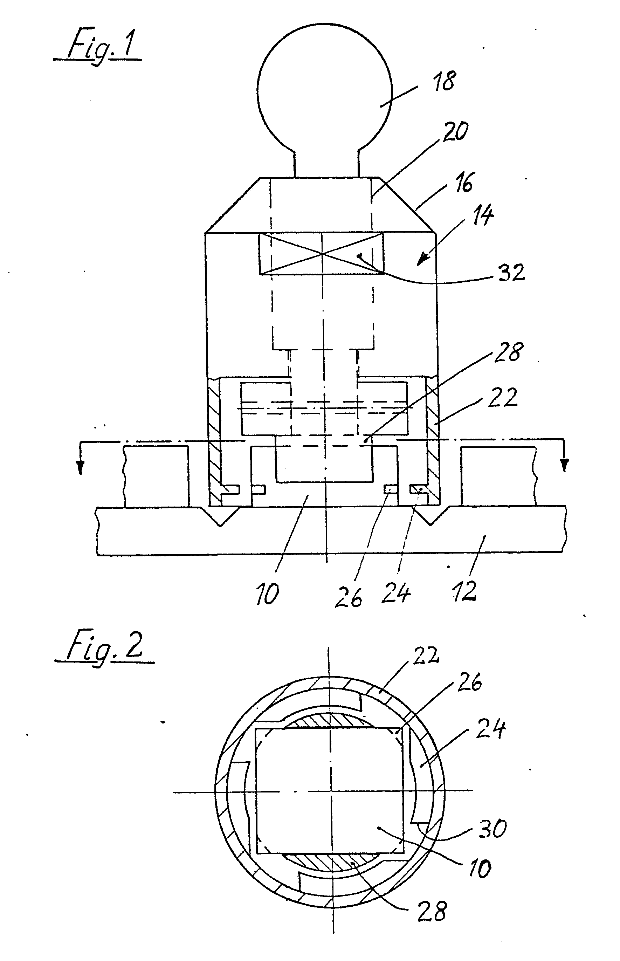

Die in Fig. 1 dargestellte Sperrvorrichtung dient zum Sperren einer einzelnen Taste 10 eines angedeuteten Tastentelefons 12. Die insgesamt mit 14 bezeichnete Sperrvorrichtung besteht aus einem Zylinderschloß, dessen Gehäuse mit 16 und dessen durch einen Schlüssel 18 relativ zum Gehäuse 16 drehbarer, gestrichelt angedeuteter Zylinder mit 20 bezeichnet sind. Mit dem Gehäuse 16 ist eine im wesentlichen hohlzylindrische Haube 22 fest verbunden, die, wie in Fig. 1 gezeigt, über die zu sperrende Taste 10 gestülpt und dabei zwischen die benachbarten Tasten eingeführt werden kann. Nahe der Unterkante der Haube 22 sind gemäß Fig. 2 vier ringsegmentförmige Riegel 24 ausgebildet oder angebracht, die dazu bestimmt sind, in Ausnehmungen 26 in den Ecken der Taste 10 einzugreifen. Zu diesem Zweck liegen die Riegel 24 mit Bezug auf die Mittellängsachse der Haube 22, deren Innendurchmesser gerade etwas größer ist als die Diagonale der Taste 10, auf einem solchen Radius, das sie sich in der in Fig. 2 dargestellten neutralen Lage neben den Seitenflächen der Taste 10 außerhalb von deren Profilquerschnitt befinden, aber bei Drehung der Haube 22 in die Ausnehmungen 26 eindringen. In dieser, nach einer Drehung von etwa 45° erreichten Sperrstellung des Schlosses 16, 20 wird der Schlüssel 18 abgezogen.

Das Herausdrehen der Riegel 24 aus den Ausnehmungen 26 wird dadurch verhindert, daß am Zylinder 20 zwei gegenüberliegende parallele Anschlagbacken 28 angebracht sind, welche an gegenüberliegenden Seitenflächen der Taste 10 anliegen.

Wenigstens eine Seitenkante der ringsegmentförmigen Riegel 24 kann jeweils als gerade oder stufenförmig abgesetzte Schneidkante 30 ausgebildet sein, welche beim erstmaligen Aufsetzen auf eine Taste und Drehen der Haube 22 selbsttätig die Ausnehmungen 26 schneidet. Um hierbei ein größeres Drehmoment aufbringen zu können, hat das mit der Haube 22 verbundene Gehäuse 16 auf gegenüberliegenden Seiten parallele Angriffsflächen 32 für ein Werkzeug nach Art eines Schraubenschlüssels.

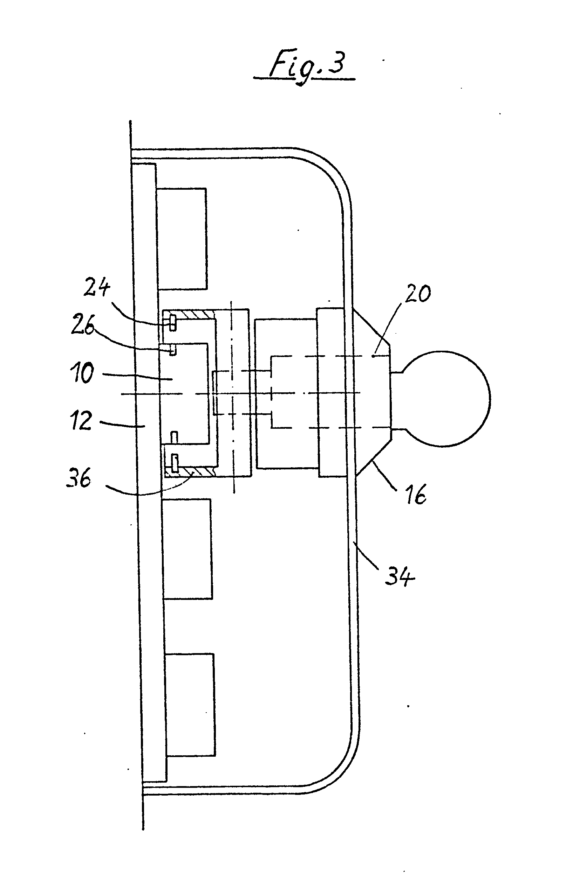

Die Ausführung nach Fig. 3 unterscheidet sich von der nach Fig. 1 und 2 im wesentlichen nur dadurch, daß mit dem Gehäuse 16 des Schlosses eine große rechteckige Haube 34 fest verbunden ist, welche mehrere oder alle Tasten eines Tastentelefons überdeckt. Infolge ihrer rechteckigen Form bildet die Haube 34 in der aufgesetzten Stellung nach Fig. 3 gleichzeitig einen Anschlag, der eine Drehung des Gehäuses 16 relativ zu den Tasten verhindert.

Weiterhin unterscheidet sich das Ausführungsbeispiel nach Fig. 3 von dem nach Fig. 1 und 2 durch die Anbringung des Riegels 24 an einer mit dem Zylinder 20 des Schlosses drehfest verbundenen Büchse 36. Die Haube 34 und die Büchse 36 können z. B. aus Kunststoff bestehen, während man den Riegel 24 zweckmäßigerweise aus Metall fertigt. Er kann auch bei der Ausführung nach Fig. 3 die in Fig. 2 gezeigte Form haben, während die Büchse 36 im Durchmesser etwa der Haube 22 der Ausführung nach Fig. 1 und 2 entspricht.

Durch einzelne Aussparungen in der Haube 34 über bestimmten Wähltasten kann erreicht werden, daß auch bei gesperrtem Telefon ein Notruf möglich ist.

Wenn das Schloß 16, 20 nicht, wie gemäß Fig. 3, über einer Wähltaste, sondern seitlich neben dem Tastenfeld an einer über dieses hinausreichenden Haube angebracht wird und mit dem Zylinder 20 eine unrunde oder exzentrisch gelagerte Scheibe fest verbunden ist, die in Sperrstellung in eine Ausnehmung einer Wähltaste am Rand des Tastenfelds eingreift, kann die Sperrvorrichtung eine niedrigere Bauhöhe haben als bei dem Ausführungsbeispiel nach Fig. 3.

Werden zum Herstellen der Ausnehmungen in den Wähltasten statt der selbstschneidenden Riegel besondere Schneidwerkzeuge benutzt, so können auch diese die vorstehend beschriebene Form von Ringsegmenten bzw. unrunder oder exzentrisch gelagerter Scheiben haben. Daneben kommen auch andere, geradlinig schneidende Werkzeuge in Frage. Um den Schneidvorgang zu erleichtern, besteht die Möglichkeit, die Schneidkante des Riegels bzw. des besonderen Schneidwerkzeugs zum Abheben mehrerer Späne nacheinander stufenförmig auszubilden. Das Abtragen mehrerer kleiner Späne nacheinander läßt sich mit geringerer Kraft ausführen als die Herstellung einer Ausnehmung in einer Wähltaste in einem einzigen Schnitt.

**Patentansprüche**

1. Vorrichtung zum Sperren wenigstens einer Wähltaste (10) bei Tastentelefonen (12), bestehend aus einer die Taste (10) überdeckenden Haube (22, 34), wenigstens einem mit dieser verbundenen, am Telefon angreifenden Riegel (24) und einem diese Verriegelung sichernden Schloß (16, 20), dadurch gekennzeichnet, daß der Riegel (24) passend zum Eingriff in eine in die Seitenfläche einer Wähltaste (10) eingeschnittene Ausnehmung (26) ausgebildet und angeordnet ist.

2. Vorrichtung nach Anspruch 1, dadurch gekennzeichnet, daß das Schloß (16, 20) ein Zylinderschloß ist, von dessen beiden relativ zueinander drehbaren Teilen (16, 20) das eine mit einem es relativ zum Tastenfeld undrehbar haltenden Anschlag (28; 34) versehen ist, welcher an der Seitenfläche wenigstens einer Wähltaste (10) zur Anlage kommt, während das andere Teil den Riegel (24) trägt.

3. Vorrichtung nach Anspruch 2, dadurch gekennzeichnet, daß das Zylinderschloß (16, 20) zwischen der Schließstellung und der Öffnungsstellung einen Drehwinkel von ca. 45° oder 135° hat, wobei in der Öffnungsstellung der Riegel (24) im wesentlichen in Flucht mit dem Anschlag (28) liegt.

4. Vorrichtung nach einem der Ansprüche 1 bis 3, dadurch gekennzeichnet, daß der Riegel (24) aus einem oder mehreren Ringsegmenten besteht, die am inneren Umfang eines drehbaren hohlzylindrischen Tragteils (22; 36) oder Exzenterarms auf einem solchen Radius angebracht sind, daß sie bei Drehung des Tragteils (22, 36) um die Mittelachse einer im wesentlichen rechteckigen Wähltaste (10) nur im Bereich der Ecken in deren Querschnittsprofil eindringen.

5. Vorrichtung nach einem der Ansprüche 1 bis 4, dadurch gekennzeichnet, daß der Riegel (24) mit einer Schneidkante (30) ausgebildet ist, welche derart angeordnet ist, daß bei einer ersten Drehbewegung des Riegels (24) relativ zu einer Wähltaste (10) aus Kunststoff mit glatter Seitenwand darin eine Ausnehmung einschneidbar ist.

6. Vorrichtung nach Anspruch 5, dadurch gekennzeichnet, daß die Schneidkante (30) zum Abheben mehrerer Späne nacheinander stufenförmig ausgebildet ist.

7. Vorrichtung nach einem der vorhergehenden Ansprüche, dadurch gekennzeichnet, daß der Riegel (24) fest an der relativ zu der mit einer Ausnehmung versehenen Wähltaste (10) drehbaren Haube (22) angebracht ist.

8. Vorrichtung nach Anspruch 7, dadurch gekennzeichnet, daß die Haube (22, 34) in ihrer Größe nur zur Überdeckung einer einzigen Wähltaste (10) ausgebildet ist.

9. Vorrichtung nach Anspruch 1 oder 2, dadurch gekennzeichnet, daß die Haube (34) das Tastenfeld mit Ausnahme bestimmter Wähltasten überdeckt.

10. Vorrichtung nach Anspruch 9, dadurch gekennzeichnet, daß der Riegel die Form einer unrunden oder exzentrisch gelagerten, mit dem Zylinder (20) des Schlosses verbundenen Scheibe hat, welche bei aufgesetzter Haube (34) vom Rand des Tastenfeldes aus nur bei bestimmter Drehwinkelstellung an einer Ecke oder einer geraden Seitenfläche einer Wähltaste (10) in eine darin eingearbeitete Ausnehmung (26) eingreift.

**Claims**

1. Locking device for at least one dial key (10) of push-button telephone sets (12) consisting of a cap (22, 34) covering the push-button (10), at least one with the cap connected bolt (24) which grips the telephone, and a lock (16, 20) securing this bolt, characterized in the sense that the bolt (24) is so formed and placed suitable for gearing into a recess (26) cut into the lateral surface of a dial key (10).

2. Apparatus according to claim 1, characterized in the sense that the lock (16, 20) is a cylinder lock, made out of two relative to each other turnable pieces (16, 20) of which one is equipped with a stop (28, 34), holding it unturnably relative to the key board and which comes to rest against the lateral surface of at least one dial key (10), while the other piece carries the bolt (24).

3. Apparatus according to claim 2, characterized in the sense that the cylinder lock (16, 20) has a rotation angle between the lock position and the open position of appr. 45° or 135°, whereas essentially in the open position the bolt (24) lies in alignment with the stop (28).

4. Apparatus according to claims 1 to 3, characterized in the sense that the bolt (24) consists of one or several collar segments, which are attached to the inner circumference of a turnable hollow cylindrical frame (22, 36) or eccentric support on such a radius that when turning the frame (22, 36) round the middle axis of an essentially rectangular dial key (10) they only enter in the area of the corners in their transverse section.

5. Apparatus according to one of claims 1 to 4, characterized in the sense that the bolt (24) is designed with a cutting edge, which is arranged in a way that at a first turning movement of the bolt (24) relative to a dial key (10) of plastic with a smooth lateral surface a recess is cuttable therein.

6. Apparatus according to claim 5, characterized in the sense that the cutting edge (30) is graduated in order to cut off several shavings successively.

7. Apparatus according to one of the abovementioned claims, characterized in the sense that the bolt (24) ist firmly attached to the cap, which is turnable relative to the dial key (10) equipped with a recess.

8. Apparatus according to claim 7, characterized in the sense that the cap (22, 34) is, in its size, designed only for the covering of a single dial key (10).

9. Apparatus according to claim 1 or 2, characterized in the sense that the cap (34) covers the key board with the exception of certain dial keys.

10. Apparatus according to claim 9, characterized in the sense that the bolt has the shape of an out-of-round or eccentrically pivoted disc, connected with the cylinder (20) of the lock, which with mounted cap (34) gears into a therein existing recess (26) from the border of the key board only at a certain rotation angle position on an edge or a straight lateral surface of a dial key (10).

**Revendications**

1. Dispositif pour verrouiller au moins une touche d'appareils téléphone à clavier composé d'un cache (22, 34) recouvrant la touche (10), d'au moins un verrou (24) lié au cache et s'accrochant sur le téléphone et d'une serrure (16, 20) assurant ce verrouillage, caractérisé de telle manière que le verrou (24) est développé et placé dans une encoche (26) découpée et située sur la face latérale d'une touche (10) conformément à l'engagement.

2. Dispositif selon la revendication 1, caractérisé de telle manière que la serrure (16, 20) est une serrure cylindrique selon laquelle des deux pièces (16, 20) tournant l'une par rapport à l'autre, l'une est munie d'une butée (28, 34) de fixation non tournante par rapport au plan des touches et qui vient en contact avec la surface latérale d'au moins une touche (10) tandis que l'autre pièce supporte le verrou (24).

3. Dispositif selon la revendication 2, caractérisé de telle manière que la serrure cylindrique (16, 20) a entre la position de fermeture et la position d'ouverture, un angle de 45° ou de 135°, alors qu'en position d'ouverture le verrou (24) se trouve pratiquement parrallèle à la butée (28).

4. Dispositif selon l'une des revendications 1 à 3, caractérisé de telle manière que le verrou (24) est composé d'un ou de plusieurs segments circulaires qui sont disposés à la périphérie intérieure d'une pièce portante cylindrique creuse et tournante (22; 36) ou d'un bras excentrique sur un rayon tel, que lors de la rotation de la pièce portante (22, 36) autour de l'axe d'une touche (10) principalement rectangulaire, seul les coins de la section sont pénétrés.

5. Dispositif selon l'une des revendications 1 à 4, caractérisé de telle manière que le verrou (24) est formé d'une arête tranchante (30) disposée de telle sorte que lors de la première rotation du verrou (24) relativement à la touche synthétique (10) aux faces latérales lisses, une encoche y est incisée.

6. Dispositif selon la revendication 5, caractérisé de telle manière que l'arête tranchante (30) est développée en palier pour enlever plusieurs copeaux successivement.

7. Dispositif selon l'une des revendications précédentes, caractérisé de telle manière que le verrou (24) est fixé solidement au cache (22) tournant relativement à la touche (10) munie d'une encoche.

8. Dispositif selon la revendication 7, caractérisé de telle manière que les dimensions du cache (22; 34) sont choisies pour ne recouvrir qu'une seule touche de sélection (10).

9. Dispositif selon la revendication 1 ou 2, caractérisé de telle manière que le cache (34) recouvre l'ensemble des touches à l'exception de touches définies.

10. Dispositif selon la revendication 9, caractérisé de telle manière que le verrou a la forme d'un disque oval ou en appui excentré, fixé au cylindre (20) de la serrure et qui lorsque le cache (34) est monté, à partir du bord du clavier et pour une position angulaire bien définie, pénétre dans une encoche (26) préparée dans un coin ou dans une face latérale plane d'une touche de sélection (10).

_Fig.1_

18

20

16

14

32

28

22

10   26   24   12

_Fig.2_

22

26

24

30

10

28

0 074 617

# Fig.3

9